Europäisches Patentamt

European Patent Office

Office européen des brevets

(19)

(11) Publication number: **0 206 425**
**A2**

# EUROPEAN PATENT APPLICATION

(21) Application number: 86201085.7

(22) Date of filing: 23.06.86

(51) Int. Cl.⁴: **G 10 K 11/00**

(30) Priority: 26.06.85 US 748751

(43) Date of publication of application: 30.12.86
Bulletin 86/52

(84) Designated Contracting States: **DE FR GB IT NL SE**

(71) Applicant: **Magnavox Government and Industrial Electronics Company, 1313 Production Road, Fort Wayne Indiana 46808 (US)**

(72) Inventor: **Congdon, John Cobb, c/o INT. OCTROOIBUREAU B.V. Prof. Holstlaan 6, NL-5656 AA Eindhoven (NL)**
Inventor: **Richter, Thomas A., c/o INT. OCTROOIBUREAU B.V. Prof. Holstlaan 6, NL-5656 AA Eindhoven (NL)**
Inventor: **Slachta, Joseph J., c/o INT. OCTROOIBUREAU B.V. Prof. Holstlaan 6, NL-5656 AA Eindhoven (NL)**

(74) Representative: **van der Kruk, Willem Leonardus et al, INTERNATIONAAL OCTROOIBUREAU B.V. Prof. Holstlaan 6, NL-5656 AA Eindhoven (NL)**

(54) Extendible sonobuoy apparatus.

(57) A sonobuoy has several components slidably mounted in an elongated tube (38). The components are longitudinally stacked one above the other at the lower end of the tube when the sonobuoy is in a pre-deployed state and are caused to slide longitudinally upwardly in the tube during sonobuoy deployment to provide a predetermined longitudinal spacing between the components when the sonobuoy is deployed. The components typically include an electronics canister (36), acoustic wave phase controls (72) and one or more active electroacoustic transducers (110). The components are attached to a plurality of flexible support cables (70). The cables are attached at their respective upper ends to the bottom of the canister (36) and are attached at their lower ends to the bottom of the tube (38). The cables are collapsed during the pre-deployed state (Fig. 5) and tautly extended during the deployed state (Fig. 6). Axial guide strips (54) are affixed to the inner surface of the tube. The canister and transducer have recesses (52, 115) engaging the strips in a sliding fit to prevent rotation about the tube longitudinal axis during deployment. The electroacoustic transducer (110) may be mounted to the tube at a predetermined axial location on the tube.

EXTENDIBLE SONOBUOY APPARATUS

BACKGROUND OF THE INVENTION
Field of the Invention

The invention relates to an extendible sonobuoy apparatus comprising a tubular outer member having an end to end axis and axial first and second ends; an inner member having first and second ends and an end to end axis substantially coaxial with said outer member axis and movable into said outer member to an inserted first position relative said outer member and extendible from said first end of said outer member to an extended second position relative said outer member; and an electroacoustic transducer having first and second axial ends for converting between electric signals and acoustical waves; said transducer being positioned along said outer member at a predetermined axial first location when said inner member is in said second position relative to said outer member. Such an apparatus is known from European Patent Application No. 110.480, laid open to public inspection.

Description of the Prior Art

Sonobuoys typically are dropped from an aircraft by parachute or are submerged from a surface vehicle into the ocean. The parachute is then expelled, an antenna and upper electronics canister are floated to the water surface, an outer casing is dropped away to the ocean floor, an electronics canister, phase, phase control means and electroacoustic transducer array components in their pre-deployed state be compact in size for purposes of storage, transportation, protection of the components and ease of handling. At the same time, in the deployed state, it is desired in certain instances to have a predetermined longitudinal spacing between the components resulting in a longitudinally extended deployed dimension. This invention provides both objectives: a compact pre-deployed state and an extended deployed state of the components.

## SUMMARY OF THE INVENTION

A sonobuoy in its pre-deployed state is provided with an outer casing in which is retained a parachute, an antenna mounted float, and an elongated cylindrical tubular outer member. An electroacoustic transducer and acoustic wave phase controls are compactly placed in the lower end of the outer member next to a nose weight affixed to the bottom of the outer member. A cylindrical electronics canister inner member is telescopically received by the outer member and is slid downwardly until it is contiguous with the components in the lower end of the outer member. A release mechanism such as that disclosed in European Patent application number 150.526 and entitled "Sonobuoy Retaining and Release Apparatus", incorporated herein by reference, typically is activated after immersion in the water and releases the parachute and antenna mounted float from the outer casing after which the outer casing falls away from the outer member to the ocean bottom. After the release, the nose weight in the outer member acts as a stabilizer and an anchor and aids in sliding the outer member downwardly along the canister. The upper end of each of a plurality of flexible cables is attached to a bulkhead which is affixed to the bottom of the canister. The cable upper ends are attached to the bulkhead at arcuately equidistantly spaced points. The lower end of each of the cables is attached at corresponding arcuately equidistantly spaced points to the nose weight. The cables are attached at predetermined longitudinally spaced points to each of components in the outer member and as the canister and outer member telescopically separate the cables become taut and the components become positioned at predetermined longitudinally spaced locations along the outer member.

Guide strips are longitudinally affixed to the inner surface of the outer member at arcuately equidistantly spaced points about its periphery. Radially outwardly facing recesses are formed in the bulkhead of the canister and in the transducer. Each recess receives a corresponding strip in a sliding fit to maintain rotative alignment between the canister, transducer and outer member as the components become deployed.

It is therefore an object of this invention to provide a sonobuoy that is extendible between pre-deployed and deployed states.

Another object is to provide a sonobuoy that prior to deployment has the sonobuoy elements compacted in an elongated outer tube and has an electronics canister telescopically received in the outer tube and in a deployed state has the canister telescopically extended from the outer tube and the components longitudinally spaced apart in the outer tube at predetermined distances.

A further object is to provide guide members in the outer tube to maintain rotational alignment between the outer tube, canister and components.

The above mentioned and other features and objects of this invention and the manner of obtaining them will become more apparent and the invention itself will be best understood by reference to the following description of an embodiment of the invention taken in conjunction with the accompanying drawings.

<u>BRIEF DESCRIPTION OF THE DRAWINGS</u>

Fig. 1 is a partially sectioned side elevational view of a  sonobuoy of this invention;

Fig. 2 is a perspective view of a sonobuoy of Fig. 1 with the parachute open and about to enter the water after being dropped from an aircraft;

Fig. 3 is a view in perspective of the sonobuoy of Fig. 2 after it has entered the water and the parachute  has been ejected;

Fig. 4 is a view in perspective of the sonobuoy of Fig. 3 fully deployed and with the outer case separated;

Fig. 5 is a vertical section of a sonobuoy of this invention in a pre-deployed state after ejection of the parachute and the upper electronics canister;

Fig. 6 is a vertical section similar to the view in Fig. 5 of a sonobuoy of this invention in a fully deployed state;

Fig. 7 is a view in perspective of a center baffle plate in one of the three plate phase shift control devices shown in Fig. 6;

Fig. 8 is a perspective view of a bulkhead that is for attachment to the lower end of the lower canister as shown in Figs. 5 and 6;

Fig. 8A is a bottom plan view of the bulkhead shown in Fig. 8;

Fig. 9 is an enlarged sectioned partial view of the bulkhead of Fig. 8 showing the cable loop retaining pin assembly and the cable in the pre-deployed state in dashed lines and in the deployed state in solid lines;

Fig. 10 is an enlarged sectioned partial view of the bulkhead of Fig. 8 in an intermediate position relative the container in the deployment of the sonobuoy;

Fig. 11 is a view similar to Fig. 10 of the bulkhead in the fully deployed state of the sonobuoy;

Fig. 12 is a cut away perspective view of the electroacoustic transducer and upper and lower collars assembly;

Fig. 13 is a section taken at 13-13 of Fig. 6;

Fig. 14 is a section taken at 14-14 of Fig. 6;

Fig. 15 is an enlarged section taken at 15-15 of Fig. 14;

Fig. 16 is a partial and simplified cross sectional view of a phased array transducer and having phase shift controlling waveguide baffles inserted in the transducer container for increasing the internal acoustic transmission path lengths;

Fig. 17 is a view in perspective of the phased array transducer suitable for use in a sonobuoy and showing the transducer prior to its deployment;

Fig. 18 is a view in perspective of the embodiment of Fig. 17 shown after deployment;

Fig. 19 is a partial and simplified longitudinal cross sectional view of the deployed phased array transducer shown in Fig. 18 showing the relationship of the cylindrical transducer element and the annular ports in the wall of the cylindrical tube;

Fig. 20 is an enlarged partially sectioned partial view of the electroacoustic transducer element portion of the embodiment disclosed in Figs. 17-19;

Fig. 20A is a further enlarged sectioned partial view of the  element and tube of the embodiment of Figs. 17-20 in the deployed state;

Fig. 21 is a side elevational view of a phased array transducer that may be used with this invention;

Fig. 22 is an enlarged cross sectional partial view of a  baffle of Fig. 16;

Fig. 23 is a partial enlarged, simplified, longitudinal cross section of an array of this invention having another embodiment of a phase shift control internally of the array tube comprising a plurality of circular perforated plates;

Fig. 23A is simplified longitudinal cross section of a transducer array having two phase shift controls of the kind shown in Fig. 23 mounted in an array tube;

Fig. 24 is a view in perspective of a single perforated plate of the Fig. 23 embodiment;

Fig. 25 is an enlarged cross section of a portion of the plate in Fig. 24;

Fig. 26 is a partial, sectional view of a modified sonobuoy of Fig. 6 wherein the transducer element is mounted in  the container; and

Fig. 27 is a partial, sectional view of a modified sonobuoy of Fig. 6 wherein the transducer element is mounted outside the container.

## DESCRIPTION OF PREFERRED EMBODIMENTS

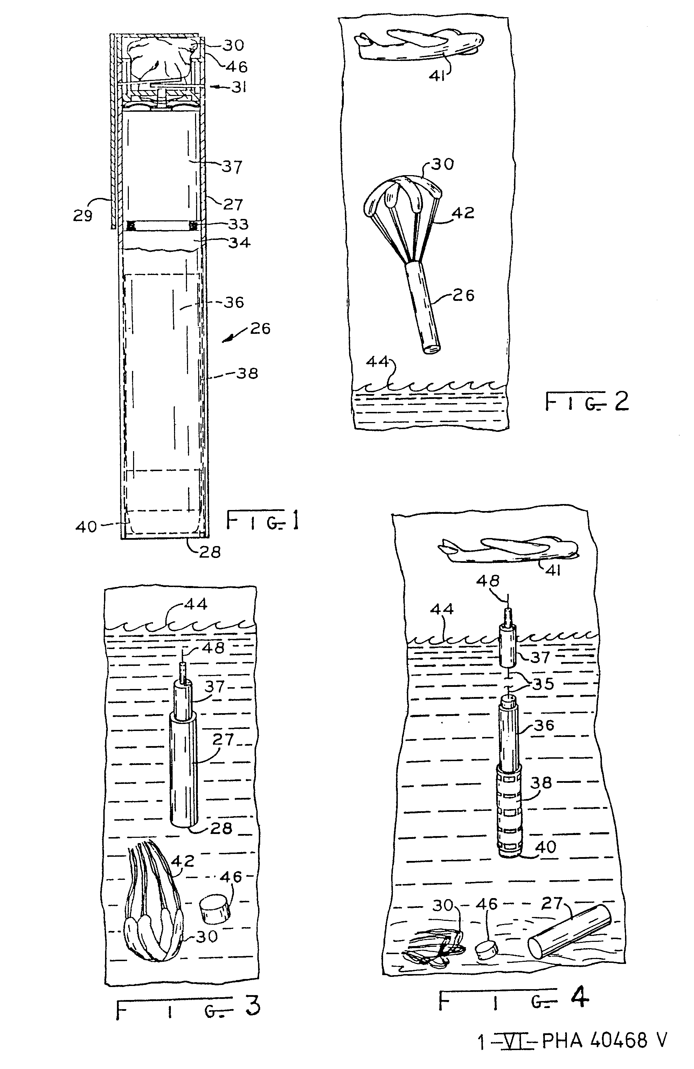

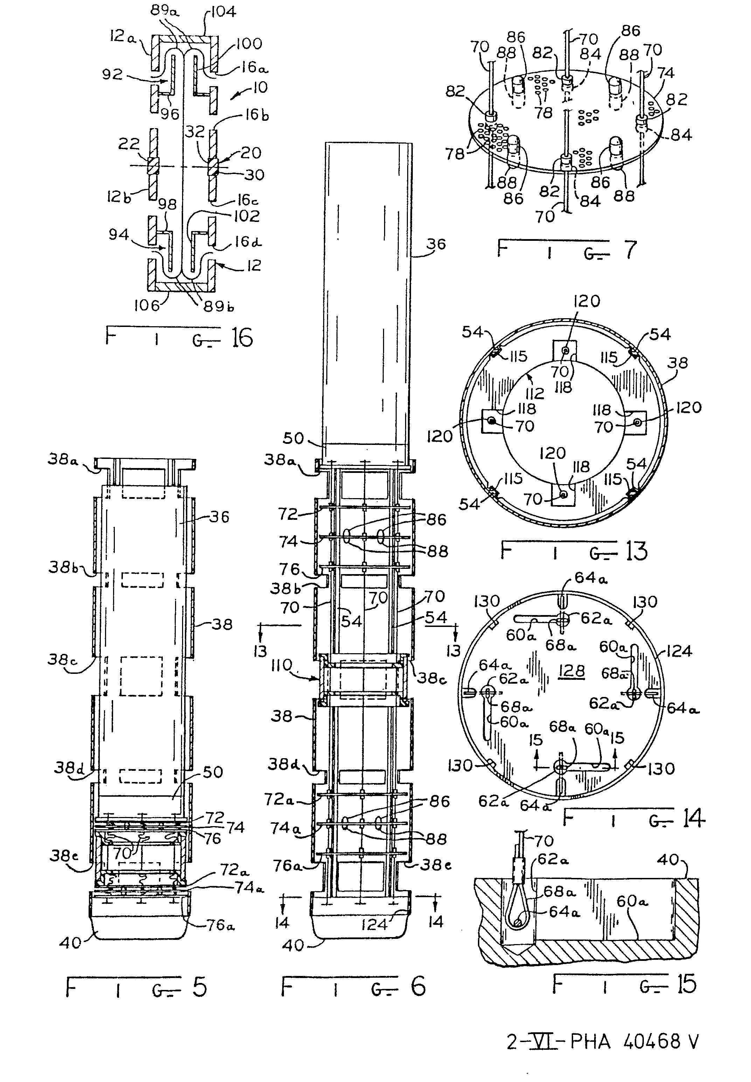

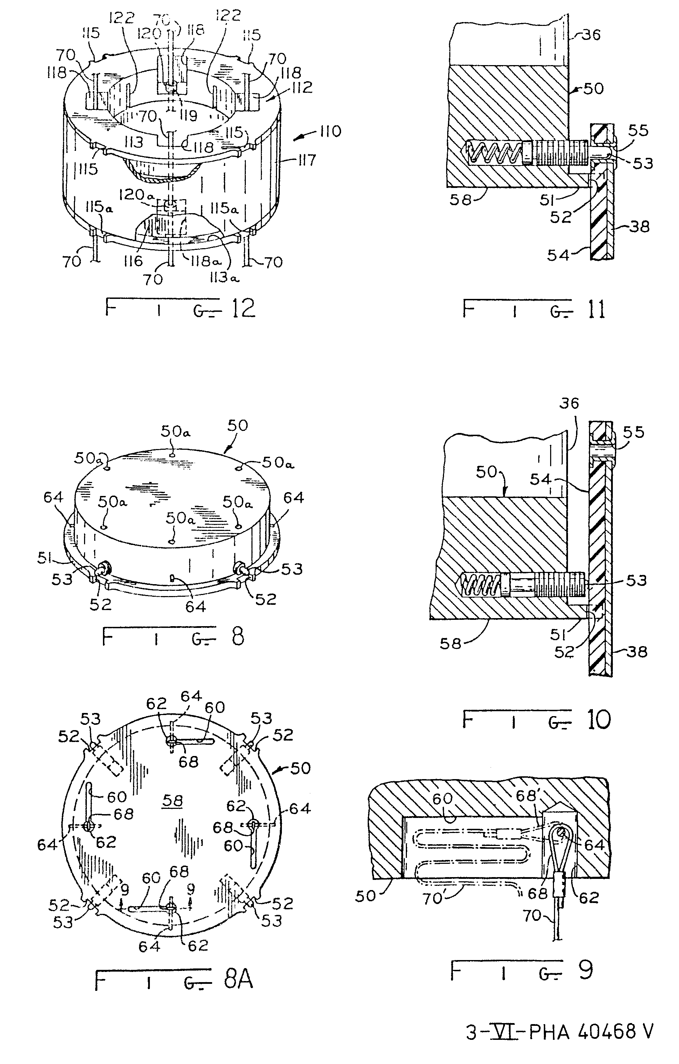

Referring to Figs. 1-4 a sonobuoy 26 prior to deployment has cylindrically tubular outer casing 27 having lower end 28, wind blade 29 at the outside upper end thereof and inside thereof in descending order parachute 30, parachute release mechanism shown generally at 31, cylindrical rigid float canister 37, spring 33, cable pack 34, lower electronic components canister 36 and a cylindrical electroacoustic transducer, such as an hydrophone, elongated container 38 having a longitudinal axis and a nose weight 40. Sonobuoy 26 is dropped or launched from aircraft 41 and blade 29 is wind actuated in conventional manner to deploy parachute 30, and a plurality of shroud lines 42 are releasably attached inside casing 27 to provide a controlled descent to the surface of water 44.

After casing 27 enters water 44, parachute 30, parachute shroud lines 42, and parachute cup 46 attached to the lower ends of lines 42 are ejected as in the previously referenced European Patent application no. 150.526 and the buoyancy force of float canister 37, and optionally the force of spring 33, causes separation of canister 37 from casing 27. Antenna 48 is automatically extended from canister 37 and extends above the surface of water 44 for transmission and/or reception of signals in an active or passive sonobuoy as is known in the art. Other retaining and release mechanism for sonobuoys may be used with the invention as herein disclosed.

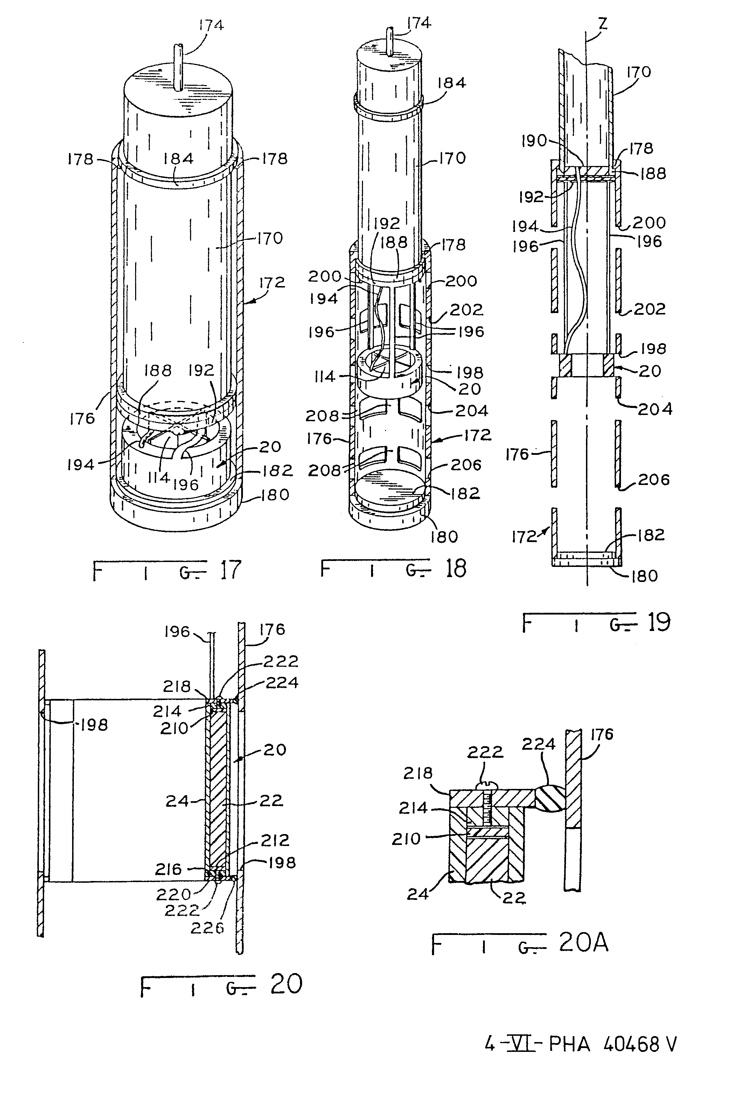

Canister 37 is connected to the upper end of cable 35 which pays out of cable pack 34. It is understood that cable 35 could pay out of a surface pack or other cable supply. The lower end of cable 35 is connected to the top of lower canister 36. In the deployed condition shown in Fig. 4, casing 27 is free of its previous contents and sinks to the bottom which is facilitated by release of end 28. Alternatively, end 28 may be perforated to facilitate the sinking of casing 27. Alternatively, an inflatable balloon may be used in place of canister 37, the balloon being inflated after the submergence of sonobuoy 26.

Shroud lines 42 must securely support casing 27 to parachute 30 in its descent to the surface of water 44 and then must be reliably and forcefully ejected clear of casing 27 to provide subsequent unrestricted emergence from casing 27 of the remaining sonobuoy components. Parachute 30, shroud retaining cup 46 and upper canister 37 are ejected. Prior to such ejection, the sonobuoy components are retained in outer casing 27. The mechanism for accomplishing this is described in the previously referenced Barker application.

After ejection lower canister 36 is telescopically extended from container 38 and the hydrophone components in container 38 are erected as will next be described.

Referring to Fig. 5, the pre-deployed sonobuoy components are shown and transducer array container 38 is telescopically and slidingly received in lower canister 36. Referring to Figs. 5, 6 and 8, solid cylindrical bulkhead 50 is fitted into and attached, as by screws, not shown, in tapped holes 50a, in the lower end of canister 36. Flange 51 is formed at the lower end of bulkhead 50 and has four equidistantly arcuately spaced radially outwardly facing oblong notches 52 about the periphery of bulkhead 50. A radially outwardly spring urged pin 53 is mounted in bulkhead 50 immediately above the arcuate center of each notch 52. Each pin 53 extends radially outwardly slightly beyond the outermost radial extent of its respective notch 52, Fig. 11, and can be depressed radially inwardly to the innermost radial extent of its respective notch 52, Fig. 10.

Affixed, as by riveting, to the inner wall of container 38 are four longitudinally aligned longitudinal strips 54 which are equidistantly arcuately spaced about the periphery of container 38 so as to register arcuately with respective notches 52. Strips 54 each extend from the top of container 38 to a point slightly above the lower end of container 38. The lower end of each strip 54 is chamfered for reasons that will become apparent. Stris 54 may be of a nylon or other long wearing bearing type material. Notches 52 have a sliding fit with respective strips 54 as bulkhead 50 slides longitudinally in container 38.

Referring to Figs. 10 and 11, near the top of each strip 54 is a metal eyelet 55 that is dimensioned to receive a respective pin 53 when bulkhead 50 is slid to its uppermost position in container 38 to lock bulkhead 50 in that position.

**0 206 425**
27.5.1986

Pins 53 ride on respective strips 54 as bulkhead 50 is slid upwardly in container 38.

The lower surface 58 of bulkhead 50, Fig. 8A, has four chordal grooves 60 the ends 62 of which are arcuately equidistantly spaced about the periphery of bulkhead 50 and are placed arcuately between notches 52. Cable retaining pins 64 are insertable in and have a friction fit with respective holes which are arcuately equidistantly spaced about bulkhead 50. A cable loop 68, Fig. 9, is formed at the upper end of each of four flexible cables 70 which may be of stranded metal having an insulative covering. The purpose of grooves 60 is to receive a respective collapsed cable in the pre-deployed state of the sonobuoy as shown by the dashed line position of loop 68a and cable 70a in Fig. 9.

Positioned below bulkhead 50 are three perforated plates: upper plate 72, center plate 74, and lower plate 76, Figs. 5-7. Each plate has perforations 78 which are dimensioned and spaced as described in the aforementioned European Patent Application no. 110.480, incorporated herein by reference, and for the purposes described in that application. Each plate has arcuately equidistantly spaced cable receiving holes formed therein about the periphery thereof. Through each cable hole passes a cable 70 and at predetermined points on each cable 70 a crimp bead 82 is crimped on cable 70 above the respective plate and a crimp bead 94 is crimped below the respective plate to position each plate at a predetermined point on each of cables 70.

Referring to Fig. 7, center plate 74 has four rounded end bumpers 86 affixed to the upper surface and spaced arcuately equidistantly around the periphery thereof and arcuately between the cable holes. Similarly, four rounded end bumpers 88 are affixed to the lower surface of plate 74. The purpose of bumpers 86, 88, which may be of a resilient platstic material, is to provide plates 72, 74, 76 with a predetermined minimum longitudinal spacing therebetween to prevent "squashing" or excessive straining of cables 70 when the sonobuoy is in a pre-deployed state.

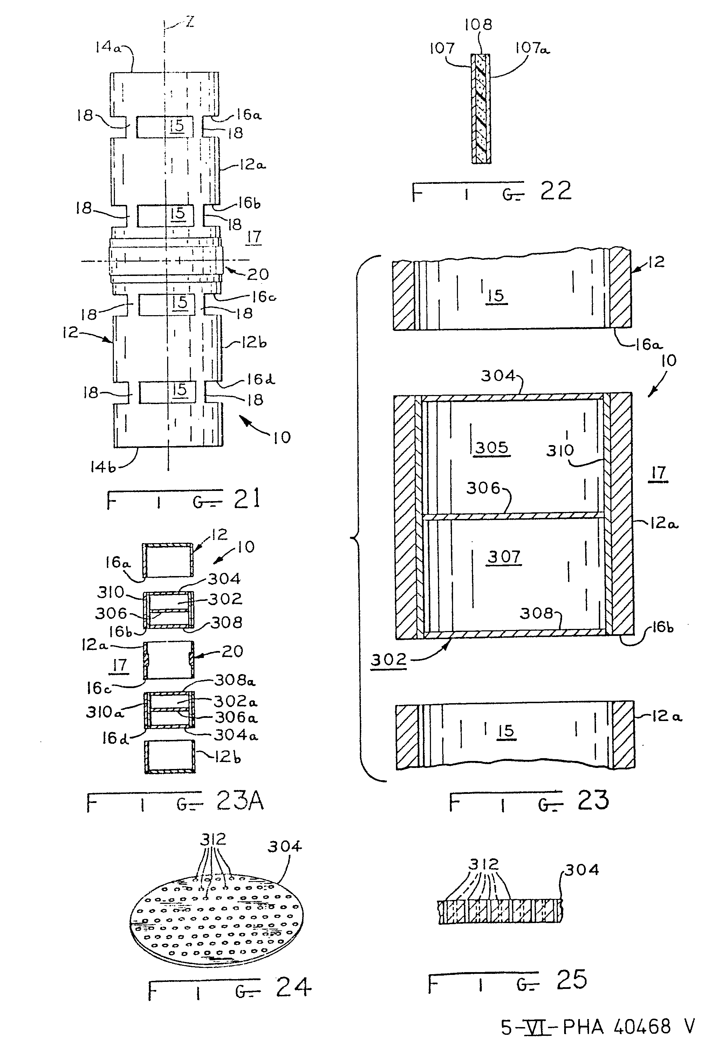

Referring to Figs. 6, 12 and 13, longitudinally slidably inserted in container 38 is transducer assembly 110 below plate 76. Assembly 110 has upper collar 112, cylindrical electroacoustic transducer element 117, which may be of materials and construction and operate in the manner of transducer element 20 in the previously referenced copending parent Congdon application, and the lower collar 116 which is identical to upper collar 112 but inserted in container 38 in inverse position from collar 112. Collar 112 is annular in configuration has annular rim 113 and has four substantially square radially inwardly facing recesses 118 which are arcuately equidistantly spaced. Each recess has centered therein an axial hole through which a respective cable 70 passes. The axial end of collar 112 is insertable into a respective end of element 114 with rim 113 providing a shoulder against which the end of element 114 seats. Lower collar 116 is similar in construction and function to upper collar 112 and the reference numerals for corresponding parts in collar 116 are the same but carry the suffix "a". Collars 112 and 116 may be molded of a plastic insulative material such as nylon.

As with plates 72, 74, 76, beads 120, 120a are crimped above and below collars 112, 116, respectively, to longitudinally position collars 112 and 116 on cables 70 in the deployed state of sonobuoy 26 and to maintain the axial ends of collars 112, 116 inserted in element 114 and the rims 113, 113a of collars 112, 116, respectively, seated against the respective ends of element 114. Rims 113, 113a have four equidistantly arcuately spaced radially outwardly facing oblong notches 115, 115a, respectively, which slidingly receive respective strips 54.

For radially inwardly opening slots 122 are formed in collar 112 and are equidistantly arcuately spaced about the periphery of collar 112 to receive the end edges of partitions, not shown, of a cavity baffle as disclosed in the previously referenced Congdon application. Similar slots are formed in collar 116 for similar purposes.

**0 206 425**
27.5.1986

Positioned beneath lower collar 116 is a second set of plates 72a, 74a, 76a similar in construction and function to plates 72, 74, 76 respectively and fastened to cables 70 by crimp beads 82a, 84a as described for crimp beads 82, 84 respectively.

Nose weight 40 is inserted into the lower end of container 38 and is a solid cylinder of relatively high specific weight metal having a shoulder 124 formed near its upper end against which the lower end of container 38 seats. Fasteners such as screws are placed through corresponding openings in and at arcuately spaced points about the periphery of the lower end of container 38 and threadedly engage weight 40 to secure it to container 38. The upper surface 128, Fig. 14, of nose weight 40 is provided with chordal grooves 60a having ends 62a. Cable pins 64a are inserted in respective holes in nose weight 40 and extend through looped lower ends 68a of cables 70 in the manner of and for the purpose of corresponding parts in bulkhead 50. Thus each cable 70 is secured at its upper end to bulkhead 50 and at its lower end to nose weight 40. Nose weight 40 is provided with a plurality of arcuately spaced aligning recesses 130 that align with and have a sliding fit with the chamfered lower ends of respective strips 54 so that nose weight 40 is rotationally aligned with bulkhead 50 and cables 70 are stretched taut parallel with the longitudinal axis of container 38.

Container 38 has annular ports 38a, 38b, 38c, 38d and 38e. In the deployed state, plates 72, 74, 76 are positioned between ports 38a, 38b; transducer element 114 is positioned at port 38c; and plates 72a, 74a, 76a are positioned between ports 38d and 38e. The proper longitudinal placement of the crimp beads 86, 88, 120, 120a, or other position determining members, on cables 70 insure the proper placement of the aforementioned elements relative the ports in the deployed state. The ports are configured in the manner of and perform the function of annular ports 200, 202, 198, 204, 206, Figs. 18 and 19, described below. Container 38 may be of aluminium or other acoustic wave transmission path boundary material.

Referring now to Fig. 21, there is shown a side elevational view of a phased transducer array 10 that may be used in the present invention. The transducer array 10 comprises an elongated cylindrical tube 12 of a suitable material to provide an acoustic transmission path boundary for acoustic waves traveling interiorly of the tube. Such tube material may be of a metal or a rigid plastic and the tube has suitable longitudinal and diametral dimensions depending on the desired acoustical frequency range and desired beam pattern for which transducer array 10 is designed. It is preferred that tube 12 material have a low acoustic transmissivity, high insensitivity to acoustic vibrations, and low acoustic absorption. Aluminium has been used as a tube material. Tube 12 has ends 14a, 14b at the upper and lower ends, respectively, thereof and a plurality of substantially annular apertures or ports 16a, 16b, 16c, 16d formed in the wall of tube 12 at predetermined longitudinally spaced apart locations along the length dimension of tube 12. Apertures 16a-16d each provide an acoustic coupling port between the internal transmission medium 15 internally of tube 12 and the external transmission medium 17 externally of tube 12. Ports 16a-16d are each formed of four equal arcuate apertures separated by longitudinal struts or ribs 18 which join portions of tube 12 above and below ports 16a-16d to provide longitudinal structural integrity of tube 12. Ribs 18 are preferably made as thin as possible in the circumferential direction and still maintain the structural rigidity of tube 12. Also, it is preferable that ribs 18 are equally spaced about the circumference of their respective ports to achieve wave pattern symmetry. The width of ribs 18 in the circumferential direction should be enough to provide structural integrity of tube 12 and to offer a means of uncoupling adverse resonances in the tube 12. However, the width should be small compared to the wavelength of the acoustic wave in the medium so that the ribs 18 do not limit the transmission of the acoustical wave through a port aperture and do not interfere with the incoming wave when the transducer array 10 is receiving and forming sine and cosine like directivity patterns in the X-Y plane. For example, a ratio of rib width to wavelength of 1:15 is acceptable. Also a ratio of rib width to one quarter of tube 12 circumference of 1:6 was found to be acceptable. These ratios are a good compromise of acoustic performance and structural integrity of tube 12. Tube 12 comprises an upper elongated portion 12a and a lower elongated portion 12b. A hollow cylindrical or ring electroacoustical transducer element 20 is supported between portions 12a, 12b.

        As disclosed in the previously referenced European patent application no. 110.480 one manner of obtaining a folded internal acoustic  path inside a phased array tube between the inner cylindrical surface of a cylindrical electroacoustic element and selected  ports in the tube is to use a folded acosutic wave guide baffle internally of the tube. Referring to Fig. 16, elongated tube 12 is provided with an upper baffle 92, and a lower baffle 94. Baffle 92 is located between ports 16a, 16b while baffle 94 is located between ports 16c, 16d. Baffles 92, 94 are of similar construction and have blocking rims 96, 98 respectively affixed to the inner walls of portions 12a, 12b respectively.  Cylindrical elongated tubular chimneys 100, 102 are affixed at their inner ends to rims 96, 98 respectively and are coaxial with tube 12. Chimney 100 extends longitudinally beyond port 16a and is directed towards end termination wall 104. Chimney 102 extends beyond port 16d and is directed towards end termination wall 106. Thus, direct acoustical communication between surface 32 of element 20 and ports 16a, 16d or between port pairs 16a, 16b and 16c, 16d is blocked by baffles 92, 94 respectively. However acoustical wave communication therebetween is provided by the resulting folded acoustic paths 89a, 89b. In addition acoustic wave reflection from end walls 104, 106 respectively can also be provided to attain desired phase at the ports 16a, 16d. Thus the effective wave path is increased without an increase of the actual physical spacing between the ports and wave phase at ports 16a, 16d may be adjusted by corresponding placement of ends 104, 106 in tube portions 12a, 12b respectively and by the actual length of the folded paths 89a, 89b. Folded path length is of course a function of the logitudinal axial dimension of chimneys 100, 102. Use of baffles 92, 94 provides for a shorter overall tube 12 length and closer physical spacing between the ports 16a-16d to achieve the desired end or side lobe suppression and vertical directivity. Baffles 92, 94 are not limited to use between the ports shown but may be used between any desired ports to provide the proper acoustic wave phase shift between the ports and/or between any of the ports and surface 32 of the transducer element 20.

Preferably, baffles 92, 94 are symmetrically longitudinally spaced from element 20, although non-symmetrical spacing may be used to achieve particular phase conditions at particular ports. Baffles 92, 94 are preferably acoustically non-transmissive and may be constructed of a sandwich of two rigid layers such as layers 107, 107a, Fig. 22, about an intermediate pressure release layer 108 of an air entrapped material or mesh. For baffles 92, 94 layers 107, 107a may be of brass shim stock and layer 108 may be of a foam plastic. Further, chimneys 100, 102 may be collapsible bellows or telescopic in construction to accommodate a pre-deployment condition of the transducer array 10.

Phase and amplitude may also be adjusted by adjusting the acoustical surface impedance of reflecting surfaces of end walls 104, 106. Referring to Fig. 16, end walls 104, 106 act as reflection surfaces for acoustical wave travel between surface 32 and ports 16a, 16d respectively. The acoustical properties of end walls 104, 106 affect wave transmission through the end walls 104, 106 and the internal standing wave by the acoustical impedance presented to the cylindrical tube 12 wave which determines the amount of wave reflection and wave absorption or attenuation. The material for end walls 104, 106 is chosen to obtain the desired impedances. Also, end walls 104, 106 while shown logitudinally symmetrically placed from surface 32 may be nonsymmetrically positioned for desired acoustical patterning. It is noted that while tube 12 is shown with end walls 104, 106, a tube with open ends is also usable with the teaching of this invention.

Referring to Figs. 17-20A, an embodiment is shown in both pre-deployed and deployed states. Transducer array 172 corresponds to array 10 in the embodiment of Figs. 1-6 and in the Fig. 17 cross section the ports are not shown. Transducer tube 176 is telescoped over electronics canister 170 in a pre-deployed state, Fig. 17, prior to use to conserve space and provide transducer protection in packaging, shipment, and storage and then the transducer is extended to the deployed state, Figs. 18, 19, when in use.

Elongated cylindrical canister 170 houses the electronics package which is coupled to electrical leads from element 20 and not shown in Figs. 17-20A via cable 194 to receive electrical signals from and/or transmit electrical signals to element 20 depending on whether transducer array 12 is in a receiving or transmitting mode, respectively. Signal cable 174 extends from the upper end of canister 170 to transmit and/or receive electrical signals to a surface floated electronic canister, not shown, which normally contains a radio frequency transmitter or transceiver and associated antenna. Cable 174 can also comprise a suspension cable for suspending the deployed transducer array 172 in the water. Element 20 has a cavity baffle 114 inserted therein in a manner and for purposes as described in the previously referenced European Patent Application No. 110.480.

Electronics canister 170 has annular guide flanges 184, 188 extending outwardly from the canister 170 spaced from the upper and at the lower ends of the canister respectively. Annular flange 188 is slidable along the inner wall of tube 176 during transition between the pre-deployed and deployed states. Tube 176 has an inner annular flange 178 at its upper end and is slidable along the outer wall of canister 170 during transition between the pre-deployed states. The coaction of flange 178 with flanges 184, 188 limit relative longitudinal travel of canister 170 within tube 176. In the pre-deployed state, flange 184 seats against flange 178 and limits further travel of canister 170 into tube 176 and provides space between the bottom of tube 176 and bottom end of canister 170 for storage of transducer 20, signal cable 194, and transducer element 20 suspension cables 196. In the deployed state flange 188 seats against flange 178 and limits any further withdrawal of canister 170 from tube 176. Cylindrical tube 176 has an end termination wall 180 at its lower end. Acoustic wave impedance disk 182 is affixed to and coextensive with inner side of wall 180. Lower end 190 of canister 170 is provided on its lower surface with an acoustic wave impedance disk 192. In the deployed state, the impedance of the combination of end 180 and disk 182 and the combination of end 190 and disk 192 function similar to ends 106 and 104 respectively as previously described and shown in Fig. 16. Disks 182, 192 provide impedance terminations of the ported tube 176 of the transducer array 172.

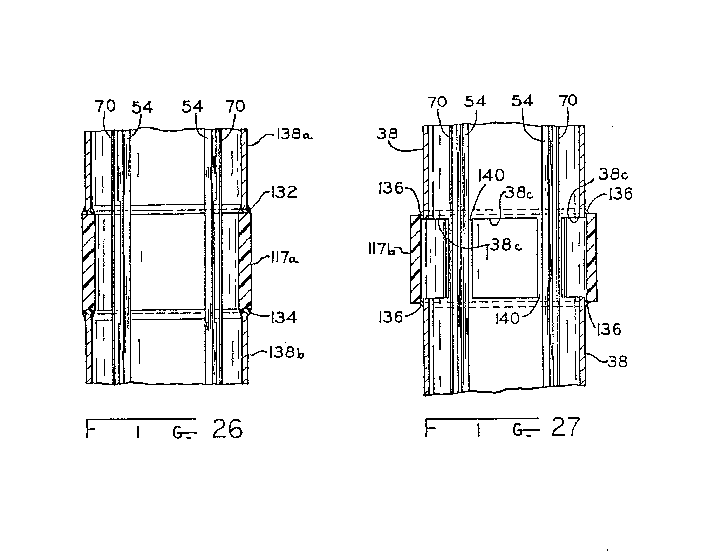

Electrode leads from element 20 are connected to canister 170 in flexible cable 194. Element 20 is suspended from canister 170 end wall 190 by a plurality of flexible cords 196, the lower ends of which are molded in encapsulating material 24, Figs. 20, 20A, or otherwise attached to element 20. The upper ends of cords 196 are secured to wall 190 by suitable means. Cable 194 and cords 196 are collapsed in the pre-deployed state. Cords 196 are extended to their full length in the deployed state, and are of a length to position element 20 opposite annular port 198 formed in tube 176. Longitudinally spaced annular ports 200, 202, 204, 206, which correspond to ports 16a, 16b, 16c, 16d, respectively, are formed in tube 176, each port having longitudinal supporting ribs 208, which correspond to ribs 18, Fig. 21, formed therein. Corresponding parts are similar in construction and function. It should be understood that the transducer array of the present invention need not be attached to or suspended from an electronics canister such as is shown herein but may if desired be otherwise suspended from available and appropriate types of surface or sub-surface members.

Referring to Figs. 20, 20A, annular end shields 210, 212 are of a pressure release material such as an air entrapped material or mesh and are placed over and under the upper and lower ends respectively of ring 22, and function to reduce acoustic radiation from the ends of ring 22 into tube 176.

Flat support annuli 214, 216 are placed above and below, respectively, shields 210, 212 and retaining annuli 218, 220 are secured as by bolts 222 to support annuli 214, 216 respectively. Annuli 218 and 214, as well as annuli 220, 216, may be a unitary machined annulus. The outer perimeters of retaining annuli 218, 220 extend radially beyond the outer wall of material 24 and abut resilient, acoustic isolator rings 224, 226, respectively. Rings 224, 226 are affixed as by cementing such as with epoxy to the annuli 218, 220, respectively, and may be of Corprene$^{TX}$ material, rubber, or other resilient material and act as acoustic seals to prevent an acoustic leakage path between the outer surface of element 20 and the interior of tube 176. Rings 224, 226 may also comprise suitable "0" rings fitted in annular grooves (not shown) in the retaining annuli 218, 220.

In the operation of the embodiment of Figs. 17-20, transducer array 172 is deployed from the pre-deployment state of Fig. 17 by the sliding of tube 176 downwardly on canister 170 until flanges 178, 188 seat. Element 20 slides within tube 176 until cords 196 are taut, at which time element 20 is opposite port 198. Baffles 92, 94 may be positioned in tube 176 above and below element 20, respectively and are preferably of the kind that have collapsible or telescopic chimneys 100, 102 so that in the pre-deployed state the profile of canister 170 and transducer 172 has a minimum longitudinal dimension and upon deployment, the chimneys 100, 102 extend to their full longitudinal dimension. The deployment may be manually or automatically accomplished as is known in the art. Baffles 92, 94 are preferably suspended by flexible cords similar to cords 196 and be of a length to position baffles 92, 94 in their proper relation to ports 200-206 to obtain the desired length of wave travel in tube 176. Suitable baffle plates such as plates 304, 306, 308 as
hereinafter described in relation to Figs. 23-25 may also
be used in lieu of chimney baffles 92, 94 and can likewise
be suspended by flexible cords similar to cords 196 of
suitable lengths to position the plates in proper locational
relationship to the ports 200-206 to provide proper internal
phase shift.

Referring to Figs. 23-25 another internal phase shift
control member 302 is shown and described in connection with
array 10 shown in Fig. 21. Mounted in tube section 12a of
array 10, shown in partial section in Fig. 23, member 302
comprises three circular perforated longitudinally spaced
baffles or plates 304, 306, 308 shown positioned between
ports 16a, 16b. Plates 304, 306, 308 are similar in construction to one another and are fixedly spaced longitudinally
in tubular cylinder 310 the outer surface of which is affixed
as by cementing to the inner wall of section 12a. Plates 304,
306, 308 are each longitudinally spaced from the next adjacent
plate by a nominal length of approximately one eight wavelength of a nominal frequency in the frequency band for
which array 10 is designed, the longitudinal spacing of
the plates depending upon the longitudinal spacing between
ports 16a, 16b and/or between ports 16c and 16d. Plates 304,
306, 308 are cemented as with epoxy cement or otherwise firmly affixed at their peripheries to the inner wall of cylinder
310. Alternatively, plates 304, 306, 308 could be firmly affixed at their respective peripheral edges to the inner wall
surface of tube section 12a as with epoxy cement. It is important that mounting of plates 304, 306, 308 be such as to
minimize plate vibration. Other manners of affixing plates
304, 306, 308 in place may be utilized. It is understood a
phase shift control member similar to member 302 is mounted
in similar manner between ports 16c, 16d of tube section
12b as shown in Fig. 23A. In one embodiment of the phase
control member 302, the baffle plates 304, 306 and 308 were
made from perforated aluminum having a hole size of 0.062
inches and an open to closed ratio of approximately 40% at a

**0 206 425**
27.5.1986

nominal operating frequency of nine (9) kHz of the transducer array.

Referring to Fig. 23A, an embodiment is shown wherein an array 10 has a phase shift control member 302 mounted between ports 16a, 16b, and phase shift control member 302a mounted between ports 16c, 16d. Member 302a has plates 304a, 306a, 308a mounted in cylinder 310a and are similar in construction and operation to member 302, plates 304, 306, 308, and cylinder 310, respectively.

Referring to Figs. 24, 25 plate 304 will be described. The longitudinal spacing of the plates may vary depending on the hole 312 diameter, the number of plates, the number of holes on each of plates 304, 306, 308, the hole total area on each plate, but the longitudinal plate spacing is preferably not greater than one eigth wavelength of the aforementioned nominal frequency.

Member 302 functions to maintain a minimal or substantially reduced phase shift of an acoustical wave between its longitudinal ends. A lesser or greater number of plates 304, 306, 308 may be used in member 302.

Phase shift control member 302 controls the phase between ports 16a, 16b of transducer tube 12. In particular, member 302 produces a low or minimum phase shift in the acoustic wave as the wave propagates along the axis of tube 12. The phase is thus controlled locally, as by member 302, along the length of the acoustically distributed - parameter tube 12, which can be considered to be an acoustical transmission line. Without a phase control member for local phase shift control, the acoustical wave would be controlled by the distributed nature of the tube and a phase shift would occur along a short length of the tube. The phase is controlled as by member 302 along the length of the tube between pertinent adjacent ports to satisfy the relative phase required of the waves which radiate from these adjacent ports. The relative phase is determined from requirements to obtain the desired vertical directivity pattern.

In member 302, spaced plates 304, 306, 308 each have holes 312 and are used to form a low pass acoustic filter
having a cut off frequency. When the frequency of the internal wave in the transducer tube 12 is substantially below
the cutoff  frequency of the low pass filter, only a small
or minimum phase shift of the acoustical wave which passes
through member 302 occurs and the wave is attenuated only a
small or minimum amount. As will be understood by those in
the art, a zero degree ($0^O$) phase shift is equivalent to a
$360^O$ phase shift. To the extent that member 302 does not
shift the phase of the acoustical wave a full $360^O$ an addit-
ional phase shift may be added to the wave to attain the
$360^O$ shift with other means such as additional transmission
path length.

Each plate 304, 306, 308 of filter 302 is mounted
transversely to the axis of the transducer tube 12. The holes
312 in each plate 304, 306, 308 become acoustical masses
which are in parallel with each other in an equivalent circuit
configuration. Chamber 305 created between adjacent plates
304, 306, and chamber 307 created between adjacent plates
306, 308 each forms an acoustical compliance or stiffness.

The overall acoustical mass created by the holes 312
in each plate 304, 306, 308 acts in series with the acoustical wave traveling along the axis of the tube 12. The compliant chambers 305, 307 between adjacent plates each forms
a compliant reactance to "acoustical ground". The final plate
in the direction of wave propagation is terminated by the
acoustical impedance of the remaining length of the tube 12.
An equivalent acoustical circuit is a ladder network that
has the acoustical masses and compliant chambers as circuit
elements which define a cutoff frequency for the low pass
filter structure.

The filter may be designed so that the cutoff frequency is sufficiently above the operating acoustical wave frequency of the transducer 10. The low phase shift across filter 302 results because of this property of the low pass
filter below cutoff and because the acoustical energies in
the masses and compliances act like lumped circuit elements.

Thus, the energy in the acoustical wave is passed along the structure with low phase shift.

The spacing between adjacent plates 304, 306, 308 and therefore the dimensions of the compliant cavities 305, 307 is designed to be substantially less than a wavelength of a nominal operating frequency of sound in the internal transmission medium 15 in tube 12, and is typically an eight-wavelength or less, so that each compliant chamber 305, 307 can be considered to be a lumped element. Also, the holes 312 in the perforated metal plates 304, 306, 308 are designed to have the correct acoustical mass to provide the desired cutoff frequency, yet not be too small to have an appreciable acoustical resistance. In other words, the mass reactance of the holes 312 should predominate over the resistive component of the impedance of the plates 304, 306, 308.

The number of plates 304, 306, 308 required depends upon the length of the tube 12 over which a minimal amount of phase shift is desired for the internal acoustical wave. For example, a longer section of tube 12 in which phase shift control is desired, requires more plates 304, 306, 308 to satisfy the eighth-wavelength, or less, criterion to preserve the lumped element consideration for the compliant chambers 305, 307. As the number of plates changes, the size of the holes 312 in each plate changes to maintain the same cutoff frequency relative to the operating frequency of the transducer 10.

Low pass filter 302 is a useful structure for the tube 12 (acoustical transmission line) to control phase of the internal wave at a particular location along an otherwise distributed parameter acoustical "transmission line" tube 12.

The filter structure 302 also provides some isolation between sections of the tube 12 to avoid any adverse internal interactions of adjacent ports in ports 16a-16d. The filter 302 is easily packaged by collapsing its structure and is easily deployed in an inverse mechanical manner. For a discussion of filter theory cf. "Electromechanical Transducers and Wave Filters" by Warren P. Mason, Second Edition, D. Van Nostrand Co. Inc., Princeton N.J.

In the embodiment of Fig. 26, the Fig. 6 embodiment is modified as described below. Fig. 6 container 38 is replaced by elongated tubular upper section 138a and lower section 138b, each section having a longitudinal axis. Transducer assembly 110 is replaced by electroacoustic transducer element 117a, which is ring shaped and may be of a material and construction and operate in the manner of transducer element 20 in the previously referenced European Patent application no. 110.480. Element 117a is coaxial with sections 138a, 138b and is circumferentially and diametrically substantially coextensive with sections 138a, 138b. Element 117a is bonded at its axial upper peripheral edge to the axial lower peripheral edge of section 138a with an elastomeric material 132, such as a polyvinyl elastomeric, that provides a secure attachment and yet allows the piezoelectric material of element 117a to vibrate substantially unrestricted by section 138a. In similar manner, the axial lower peripheral edge of element 117a is bonded to the axial upper peripheral edge of lower section 138b by elastomeric material 134. Element 117a may also be coupled to sections 138a, 138b as disclosed and described for the Fig. 4 embodiment of the aforementioned European Patent application no. 110.480. Thus, element 117a is essentially placed in port 38c of the Fig. 6 embodiment.

The remaining components of the embodiment of Fig. 26 are similar to and carry similar reference numerals to those of the embodiment of Fig. 6. Sections 138a, 138b are constructed similarly to container 38 of Fig. 6 except as described above.

The operation of the embodiment of Fig. 26 is similar to that of embodiment of Fig. 6 except that since element 117a is affixed to sections 138a, 138b it does not axially slide or move relative sections 138a, 138b during deployment of the sonobuoy. Plates 72, 74, 76 and plates 72a, 74a, 76a are deployed in the Fig. 26 embodiment as they are in the Fig. 6 embodiment.

In the embodiment of Fig. 27, the Fig. 6 embodiment is modified as described below. Transducer assembly 110 is replaced by electroacoustic transducer element 117b, which is similar to element 117a of the Fig. 26 embodiment, except that the circumference and diameter of element 117b are greater than those of container 38 which extends therethrough and is coaxial therewith. Element 117b is affixed at an axial location of container 38 that is opposite port 38c by bonding with an elastomeric material 136, such as a polvinyl elastomeric, to the outer surface of ribs 140 that are arcuately spaced about port 38c and are similar in dimension, construction and function to ribs 18, Fig. 21. In the example shown, where element 117b is longer in the axial direction than port 38c, the outer surface of container 38 above and below port 38c it is also bonded to element 117b above and below port 38c. Material 136 provides a secure attachment to container 38 and yet allows the piezoelectric material of element 117b to vibrate substantially unrestricted by container 38. Element 117b may also be equal in length or shorter in length in the axial direction than port 38c and the bonding to ribs 140 will provide adequate transducer element support.

The remaining components of the embodiment of Fig. 27 are similar to and carry similar reference numerals to those of the embodiment of Fig. 6. The operation of the embodiment of Fig. 27 is similar to that of embodiment of Fig. 6 except that element 117b replaces assembly 110. Since element 117b is affixed to container 38, it does not axially slide or move relative container 38 during deployment of the sonobuoy. Plates 72, 74, 76 and plates 72a, 74a, 76a are deployed in the Fig. 27 embodiment as they are in the Fig. 6 embodiment.

In the embodiments of Figs. 26, 27 in the pre-deployed condition, plates 72, 74, 76, 72a, 74a, 76a are stacked in descending order, one on top of the other, near the bottom of section 138b, Fig. 26, or container 38, Fig. 27. Preferably, spacing bumpers 86 are affixed to the upper surface of plate 72a to provide axial spacing between plates 76 and 72a in the pre-deployed condition.

Modifications in addition to those already mentioned that can be employed with the teaching of this invention include a container 38 having a flat side and the internal elements such as bulkhead 50, plates 72, 74, 76, 72a, 76a, transducer assembly 110 and nose weight 40 each having a corresponding flat side that slidingly engage the container 38 flat side to maintain a predetermined relative rotational position between the elements. Other telescopic supporting structures may be used in lieu of cables 70. The internal elements may be in separate respective cylindrical sleeves which are of varying lengths and telescopic one within another and have appropriate stop members so that in a pre-deployed state the sleeves are all one within another and in a deployed state they are fully extended one from the other. Also tensile springs may be used in place of flexible cables 70. Telescopic rods may be used instead of flexible cables 70. Telescopic rods may be used instead of cables 70. The baffle set of plates 72, 74, 76 and the baffle set of plates 72a, 74a, and 76a may be replaced with other phase control members and/or active electroacoustic transducers. Spacers between the baffle plates may be other than bumpers 86, 88. Each set of crimp beads 82, 84 may be replaced with other plate positioning members such as with a single crimp bead that is affixed to a respective plate. Containers 38 can be open ended at the lower end, and diametral rods may be used to support the lower ends of cables 70. Lower canister 36 and container 38 can be inverted in position.

While there have been described above the principles of this invention in connection with specific embodiments, it is to be understood that this is by way of example and is not limiting of the scope of this invention.

1.      An extendible sonobuoy apparatus comprising a tubular outer member having an end to end axis and axial first and second ends; an inner member having first and second ends and an end to end axis substantially coaxial with said outer member axis and movable into said outer member to an inserted first position relative said outer member and extendible from said first end of said outer member to an extended second position relative said outer member; and an electroacoustic transducer having first and second axial ends for converting between electric signals and acoustical waves; said transducer being positioned along said outer member at a predetermined axial first location when said inner member is in said second position relative to said outer member, characterized in that guide means are provided for guiding the axial movement in said outer member of said inner member to said second position and of said transducer to said first location so that said inner member and said transducer have a predetermined relative rotative position about said axis after said movement.

2.      The apparatus of Claim 2, wherein said guide means comprises a  plurality of at least two axially aligned strips equidistantly spaced about the periphery of said outer member inner surface; and a corresponding number of radially outwardly opening recesses formed equidistantly about the periphery of each of said inner member and said transducer, each recess receiving a corresponding strip and being in sliding fit engagement with its respective strip.

3.      The apparatus of Claims 1 or 2  including locking means for locking said inner member to said outer member in said second position.

4.      The apparatus of Claim 3, wherein said locking means comprises at least one pin mounted in said inner member on a periphery of said inner member for radial reciprocable movement into and out of said inner member; each said pin being
spring urged radially outwardly; a pin receiving hole being
formed in said outer member corresponding to each of said
pins and registrable with its said corresponding pin when
said inner member is in said second position whereby each of
said pins is spring urged into its respective corresponding
hole when said inner member is in said second position.

5.      An extendible sonobuoy apparatus as claimed in any of
the preceding Claims, further comprising first means coupled
between said inner member and said transducer for providing
a predetermined axial movement of said transducer in said
outer member upon a predetermined portion of the axially
extending movement of said inner member relative said outer
member from said first position to said second position and
for supporting said transducer at said predetermined axial
first location on said outer member when said inner member is
in said second position relative said outer member; said first
means comprises a plurality of flexible cables; each of said
cables being connected at one end to said inner member and
connected at the opposite end to said second end of said
outer member; attaching means for attaching said transducer
at an intermediate point of each of said cables; said cables
being dimensioned to become taut and said intermediate point
being selected to support said transducer at said predetermined axial first location when said inner member is in
said second position; characterized in that  a recess is
formed in said inner member adjacent said one end of each
of said cables for receiving and storing a portion of said
each cable when said inner member is in said first position;
a recess is formed in said second end of said outer member
adjacent said opposite end of each of said cables for receiving and storing a portion of said each cable when said
inner member is in said first position.

6.      An extendible sonobuoy apparatus as claimed in any
of the Claims 1 to 4, further comprising first means coupled
between said inner member and said transducer for providing a predetermined axial movement of said transducer in said outer member upon a predetermined portion of the axially extending movement of said inner member relative said outer member from said first position to said second position and for supporting said transducer at said predetermined axial first location on said outer member when said inner member is in said second position relative said outer member; said first means comprises a plurality of flexible cables; each of said cables being connected at one end to said inner member and connected at the opposite end to said second end of said outer member; attaching means for attaching said transducer at an intermediate point of each of said cables; said cables being dimensioned to become taut and said intermediate point being selected to support said transducer at said predetermined axial first location when said inner member is in said second position; characterized in that said attaching means comprises crimp beads being crimped to said cables to secure said cables at said intermediate points to said transducer.

7.      An extendible sonobuoy apparatus as claimed in any of the Claims 1 to 4, further comprising first means coupled between said inner member and said transducer for providing a predetermined axial movement of said transducer in said outer member upon a predetermined portion of the axially extending movement of said inner member relative said outer member from said first position to said second position and for supporting said transducer at said predetermined axial first location on said outer member when said inner member is in said second position relative said outer member; acoustic coupling means for providing one or more openings in said outer member at said predetermined axial first location, whereby said transducer is positioned at said openings when said inner member is in said second position relative said outer member; said acoustic coupling means provides one or more openings at a plurality of axially spaced peripheries on said outer member; said acoustic coupling means comprises one or more openings in a substantially arcuate configuration at a second periphery of said outer member at
an axial second location spaced in one axial direction from
said axial first location; said acoustic coupling means comprises one or more openings in a  substantially arcuate configuration at a third periphery of said outer member at an
axial third location spaced from said axial first location
in the axial direction opposite to said one axial direction;
a first and second phase control means for controlling the
acoustical wave phase in said outer member; said transducer
being axially between and closely adjacent said first and
second phase control means when said inner member is in
said first position; said first and second phase control
means being axially slidable in said outer member; said first
means being coupled between said inner member and each of
said first and second phase control means for providing a
predetermined axial movement of said first and second phase
control means in said outer member upon said predetermined
portion of the axially extending movement of said inner
member relative said outer member from said first position
to said second position and for supporting said first phase
control means at a predetermined axial fourth location on
said outer member between said axial first and second locations when said inner member is in said second position
relative said outer member and for supporting said second
phase control means at a predetermined axial fifth location on said outer member between said axial first and
third locations when said inner member is in said second
position relative said outer member; said first means comprises a plurality of flexible cables; each of said cables
being connected at one end to said inner member and connected
at the opposite end to said second end of said outer member;
attaching means for attaching at respective intermediate
points at each of said cables said transducer and said first
and second phase control means; said cables being dimensioned
to become taut and said attachment intermediate points
being selected to support said transducer at said predetermined axial first location, said first phase control means at said axial fourth location and said second phase control means at said axial fifth location when said inner member is in said second position, characterized in that each of said first and second phase control means comprises a plurality of axially spaced perforated plates; spacer means being between adjacent plates in each said plurality of plates for axially spacing said plates in each said plurality of plates to protect said cables from acute bending when said inner member is in said first position.

**0 206 425**

FIG. 1

FIG. 2

FIG. 3

FIG. 4

FIG 16

FIG 7

FIG 13

FIG 14

FIG 15

FIG 5

FIG 6

2-VI-PHA 40468 V

0 206 425

FIG 12

FIG 11

FIG 8

FIG 10

FIG 8A

FIG 9

3-VI-PHA 40468 V

4/6

0 206 425

FIG 17

FIG 18

FIG 19

FIG 20

FIG 20A

4 -VI- PHA 40468 V

FIG. 21

FIG. 22

FIG. 23A

FIG. 23

FIG. 24

FIG. 25

5-VI-PHA 40468 V

0 206 425

F I G. 26

F I G. 27